# EUROPEAN PATENT APPLICATION

(11) **EP 4 047 740 A1**
(43) Date of publication of application: **24.08.2022**
(21) Application number: 20887748.0
(22) Date of filing: 22.10.2020
(51) Int. Cl.: H01Q 1/22, H01Q 7/00, H01Q 7/06

(54) **ANTENNA AND MOBILE TERMINAL**

(30) Priority: 14.11.2019 CN 201911114555
(71) Applicant: Huawei Technologies Co., Ltd., Shenzhen, Guangdong 518129 (CN)
(72) Inventor: GUO, Jian, Shenzhen, Guangdong 518129 (CN); DONG, Jin, Shenzhen, Guangdong 518129 (CN); CHU, Jiahui, Shenzhen, Guangdong 518129 (CN); YU, Hui, Shenzhen, Guangdong 518129 (CN)
(74) Representative: Gill Jennings & Every LLP
(86) International application number: PCT/CN2020/123011
(87) International publication number: WO 2021/093545

(57) **Abstract**

This application provides an antenna and a mobile terminal. The antenna is an NFC antenna, and the antenna is applied to the mobile terminal. When being specifically disposed, the antenna includes a feeding line, a radiator, and a grounding line. The radiator is an annular radiator with an opening, and ends of the radiator on two sides of the opening are separately a feed point and a ground point. A distance between the ground point and the feed point is not less than a specified value. The feed point is connected to the feeding line, and the ground point is connected to the grounding line. In the foregoing technical solution, the NFC antenna is separately disposed in the mobile terminal, to be decoupled from another non-NFC antenna. In addition, the NFC antenna is disposed in a manner in which a single end is used for feeding and the other end is grounded, so that single-end NFC performance is implemented in an environment with extremely small clearance. Compared with a dual-end NFC antenna in a conventional technology, the NFC antenna has lower costs and a smaller area.

## Description

### CROSS-REFERENCE TO RELATED APPLICATIONS

This application claims priority to Chinese Patent Application No. 201911114555.8, filed with the China National Intellectual Property Administration on November 14, 2019 and entitled "ANTENNA AND MOBILE TERMINAL", which is incorporated herein by reference in its entirety.

### TECHNICAL FIELD

This application relates to the field of mobile terminal technologies, and in particular, to an antenna and a mobile terminal.

### BACKGROUND

As a screen-to-body ratio of a full screen becomes increasingly large and antenna clearance becomes increasingly small, a conventional NFC (Near Field Communication, near field communication) co-radiation antenna solution affects communication performance of NFC to different degrees because of reduction in clearance of a radiator or reduction in a metal length of a top co-radiation antenna due to a layout.

As a short-distance contactless communication manner, the NFC has advantages such as high security, a fast response, and low costs compared with a short-distance communication technology such as Bluetooth or infrared. Therefore, how to ensure the communication performance of the NFC in extremely small clearance without increasing costs becomes a new challenge.

In a solution in a conventional technology, an NFC antenna is a part of a metal frame, and the metal frame has at least one slot. An antenna structure includes an NFC antenna and a non-NFC antenna. A length of an NFC radiator is not limited by a non-NFC radiator through two groups of filtering. In this solution, in one aspect, a length of an NFC antenna radiator is increased, and in another aspect, NFC performance of a communication terminal is improved. However, performance of the NFC antenna is related to clearance of the metal frame. After the clearance is less than 1.5 mm, performance of the co-radiation antenna solution decreases.

### SUMMARY

This application provides an antenna and a mobile terminal, to improve a volume of the antenna and facilitate a near field communication effect of the mobile terminal.

According to a first aspect, an antenna is provided. The antenna is an NFC antenna, and the antenna is applied to a mobile terminal. When being specifically disposed, the antenna includes a feeding line, a radiator, and a grounding line. The radiator is an annular radiator with an opening, and ends of the radiator on two sides of the opening are separately a feed point and a ground point. A distance between the ground point and the feed point is not less than a specified value. The feed point is connected to the feeding line, and the ground point is connected to the grounding line. In the foregoing technical solution, the NFC antenna is separately disposed in the mobile terminal, to be decoupled from another non-NFC antenna. In addition, the NFC antenna is disposed in a manner in which a single end is used for feeding and the other end is grounded, so that single-end NFC performance is implemented in an environment with extremely small clearance. Compared with a dual-end NFC antenna in a conventional technology, the NFC antenna has lower costs and a smaller area.

In a specific implementable solution, the radiator includes a first radiation part, a second radiation part, and a third radiation part, the second radiation part is separately connected to the first radiation part and the third radiation part, and the first radiation part, the second radiation part, and the third radiation part form a U-shaped radiator.

In a specific implementable solution, widths of the first radiation part, the second radiation part, and the third radiation part are equal or approximately equal.

In a specific implementable solution, the radiator includes a first radiation part and a second radiation part connected to the first radiation part, and the first radiation part and the second radiation part form an L-shaped radiator.

In a specific implementable solution, the radiator includes a first radiation part, a second radiation part, and a third radiation part, the second radiation part is separately connected to the first radiation part and the third radiation part, and the first radiation part, the second radiation part, and the third radiation part form a U-shaped radiator;
an end that is of the first radiation part and that is away from the second radiation part has a first third bending structure;
an end that is of the third radiation part and that is away from the second radiation part has a second third bending structure; and
the ground point and the feed point are disposed in a one-to-one correspondence on the first third bending structure and the second third bending structure.

In a specific implementable solution, a third bending structure used to avoid a structure or a component in the mobile terminal is disposed on the radiator. Therefore, disposing of the antenna is facilitated.

In a specific implementable solution, the third bending structure is a U-shaped third bending structure. Therefore, space in the mobile terminal can be used to a maximum extent.

In a specific implementable solution, a tuning stub is connected on the radiator.

In a specific implementable solution, the radiator includes a ferrite layer and a conductive layer that are stacked.

In a specific implementable solution, the conductive layer is a circuit layer or a steel plate of the mobile terminal. The antenna is disposed by using different structures in the mobile terminal.

In a specific implementable solution, the specified value is 9 mm.

According to a second aspect, a mobile terminal is provided, and the mobile terminal includes a middle frame and the antenna according to any one of the foregoing implementable solutions that is disposed in the middle frame. In the foregoing technical solution, an NFC antenna is separately disposed in the mobile terminal, to be decoupled from another non-NFC antenna. In addition, the NFC antenna is disposed in a manner in which a single end is used for feeding and the other end is grounded, so that single-end NFC performance is implemented in an environment with extremely small clearance. Compared with a dual-end NFC antenna in a conventional technology, the NFC antenna has lower costs and a smaller area.

In a specific implementable solution, a mainboard is disposed on the middle frame, and a feed point and a ground point of the antenna are disposed on the mainboard. The mainboard bears the feed point and the ground point of the antenna.

In a specific implementable solution, a steel plate is disposed on the middle frame, the antenna is disposed on the steel plate, and when the radiator includes a conductive layer and a ferrite layer that are stacked, the steel plate is the conductive layer. The steel plate supports the antenna.

In a specific implementable solution, the middle frame is a metal middle frame, and the metal middle frame is used as ground of the mobile terminal; the steel plate is electrically connected to the metal middle frame; and the antenna is disposed on the steel plate, and the ground point of the antenna is disposed in the metal middle frame. An occupied area of the antenna is increased, and performance of the antenna is improved.

### BRIEF DESCRIPTION OF DRAWINGS

FIG. 1 is a schematic diagram of a layout of a mobile terminal according to an embodiment of this application;
FIG. 2 is a diagram of a circuit of an antenna according to an embodiment of this application;
FIG. 3 is a schematic diagram of a structure of a first type of radiator of an NFC antenna according to an embodiment of this application;
FIG. 4 is a schematic diagram of a structure of a second type of radiator of an NFC antenna according to an embodiment of this application;
FIG. 5 is a schematic diagram of a structure of a third type of radiator of an NFC antenna according to an embodiment of this application;
FIG. 6 is a schematic diagram of a structure of a fourth type of radiator of an NFC antenna according to an embodiment of this application;
FIG. 7 is a schematic diagram of a structure of a fifth type of radiator of an NFC antenna according to an embodiment of this application;
FIG. 8 is a schematic diagram of a structure of a radiator of an NFC antenna according to an embodiment of this application;
FIG. 9 is a schematic diagram of a layout of another type of radiator of an NFC antenna according to an embodiment of this application;
FIG. 10 is a schematic diagram of a layout of another type of radiator of an NFC antenna according to an embodiment of this application;
FIG. 11 is a schematic diagram of a layout of another type of NFC antenna in a mobile terminal according to an embodiment of this application;
FIG. 12 is a schematic diagram of a layout of another type of NFC antenna in a mobile terminal according to an embodiment of this application;
FIG. 13 is a schematic diagram of a layout of another type of NFC antenna in a mobile terminal according to an embodiment of this application; and
FIG. 14 is a schematic diagram of a layout of another type of NFC antenna in a mobile terminal according to an embodiment of this application.

### DESCRIPTION OF EMBODIMENTS

To facilitate understanding of an antenna provided in embodiments of this application, an application scenario of the antenna is first described. The antenna is applied to a mobile terminal, for example, a common mobile terminal such as a mobile phone, a tablet computer, a wearable product, or a notebook computer. A mobile phone is used as an example. The mobile phone includes a middle frame and an antenna disposed on the middle frame. The antenna is an NFC (Near Field Communication, near field communication) antenna, and is used for near field communication of the mobile phone. A simple and touch-based solution is provided, so that a consumer can easily and intuitively exchange information and access content and a service. However, in a conventional technology, an NFC antenna and a non-NFC antenna generally share a radiator, and therefore, the NFC antenna needs to be decoupled from the non-NFC antenna. In addition, because space in the mobile phone in the conventional technology is becoming increasingly smaller, clearance in the mobile phone is becoming increasingly smaller, and performance of the NFC antenna is greatly affected. Therefore, embodiments of this application provide an NFC antenna. To make an objective, a technical solution, and an advantage of this application clearer, the following further describes this application in detail with reference to the accompanying drawings.

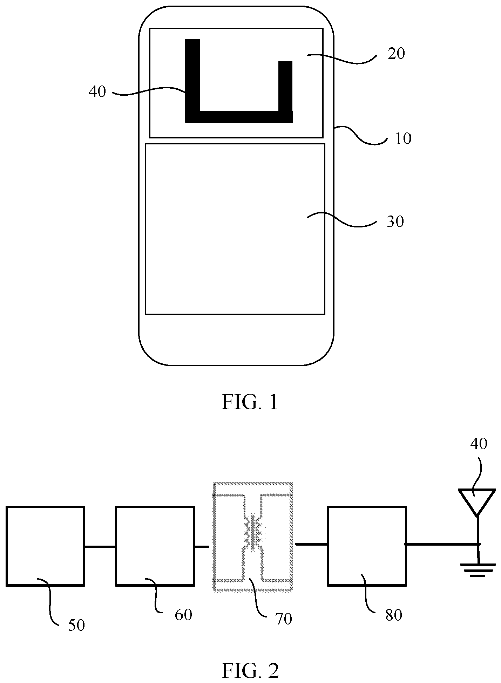

FIG. 1 shows a specific structure of an NFC antenna used in a mobile terminal according to an embodiment of this application. The mobile terminal includes a middle frame 10 and a mainboard 20 and a battery 30 that are disposed on the middle frame 10. As shown in FIG. 1, the mainboard 20 and the battery 30 are disposed side by side on the middle frame 10. Still referring to FIG. 1, an NFC antenna 40 is located on the mainboard 20.

FIG. 2 shows an example of a circuit diagram of the NFC antenna 40. A circuit includes an NFC chip 50, an NFC filtering circuit 60 connected to the NFC chip 50, a balun 70 connected to the NFC filtering circuit 60, an NFC matching circuit 80 connected to the balun 70, and the NFC antenna 40 connected to the NFC matching circuit 80. The NFC chip 50 is configured to transmit a signal of the NFC antenna 40, and the signal is transmitted from the NFC chip 50 to the NFC filtering circuit 60, and is filtered by the NFC filtering circuit 60, and then the signal is sent to the NFC matching circuit 80 through the balun 70, and is transmitted to the NFC antenna 40 through the NFC matching circuit 80. The NFC chip 50, the NFC filtering circuit 60, the balun 70, and the NFC matching circuit 80 are all disposed on the mainboard 20 of the mobile terminal.

The NFC antenna 40 provided in this embodiment of this application mainly includes a feeding line, a radiator 41, and a grounding line. The feeding line is configured to connect to the NFC matching circuit 80, and is configured to transmit a signal to the radiator 41 for transmission, and the grounding line is configured to connect the radiator 41 to ground. The feeding line may be a circuit layer, a metal layer, or a metal cable in the mobile terminal. One end of the feeding line is connected to the NFC matching circuit 80, and the other end is connected to a feed point 414 on the radiator 41. The grounding line may also be a circuit layer, a metal layer, or a metal cable in the mobile terminal. One end of the grounding line is connected to a ground point 415 on the radiator 41, and the other end is connected to ground in the mobile terminal. The grounding line may be a spring plate or a conductive soft auxiliary material (conductive silicone, conductive foam, or the like). The ground in the mobile terminal may be ground of the mainboard 20 of the mobile terminal, or the middle frame 10 or a rear cover of the mobile terminal is used as the ground.

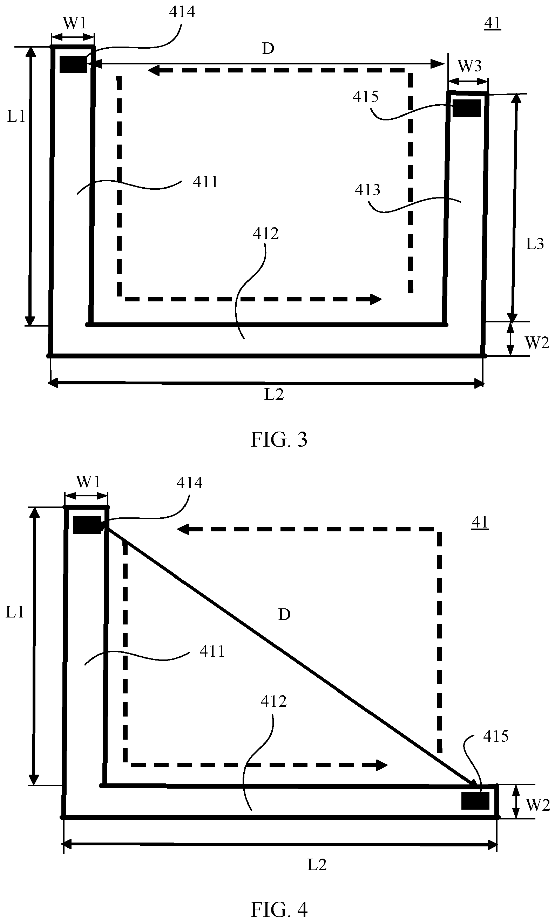

FIG. 3 shows an example of a structure of the radiator 41 of the NFC antenna in FIG. 2. The radiator 41 shown in FIG. 3 includes a first radiation part 411, a second radiation part 412, and a third radiation part 413. The second radiation part 412 is separately connected to the first radiation part 411 and the third radiation part 413, and the first radiation part 411, the second radiation part 412, and the third radiation part 413 form a U-shaped radiator 41. An end that is of the first radiation part 411 and that is away from the second radiation part 412 and an end that is of the third radiation part 413 and that is away from the second radiation part 412 are used as ends of the entire radiator 41. For ease of description, the ends of the radiator 41 are separately referred to as a first end and a second end. The feed point 414 is disposed at the first end, and the ground point 415 is disposed at the second end. Both the feed point 414 and the ground point 415 shown in FIG. 3 are in a rectangular shape. However, a specific shape of the feed point 414 is not specifically limited in this embodiment of this application. The ground point 415 and the feed point 414 may alternatively be in a different shape such as a circle, an oval, or a rhombus. The ground point 415 and the feed point 414 may alternatively be in different shapes, for example, the ground point 415 is circular, and the feed point 414 is rectangular.

Still refer to FIG. 3. The first radiation part 411, the second radiation part 412, and the third radiation part 413 each are a linear structure, and the first radiation part 411 is parallel to or approximately parallel to the third radiation part 413. A length of the first radiation part 411 is L1, and a width is W1. A length of the second radiation part 412 is L2, and a width is W2. A length of the third radiation part 413 is L3, and a width is W3. When the lengths and widths of the first radiation part 411, the second radiation part 412, and the third radiation part 413 are specifically set, the widths of the first radiation part 411, the second radiation part 412, and the third radiation part 413 meet: W1=W2=W3, or W1, W2, and W3 are approximately equal or unequal. In this embodiment of this application, the lengths of the first radiation part 411, the second radiation part 412, and the third radiation part 413 are not specifically limited. For example, there are different cases such as L1≥L2≥L3, L1≥L3≥L2, and L1≤L2≤L3. However, in any one of the foregoing cases, a distance between the feed point 414 and the ground point 415 needs to meet a specified value. As shown in FIG. 3, if the distance between the feed point 414 and the ground point 415 is D, D is not less than the specified value. If the specified value is 9 mm, D≥9 mm. Specifically, a distance such as 10 mm, 11 mm, 15 mm, or 20 mm may be used, so that a signal of the NFC antenna can excite a larger eddy current.

It should be understood that, that the first radiation part 411, the second radiation part 412, and the third radiation part 413 are linear is merely a specific example. Alternatively, all three radiation parts may be arc-shaped, and the three radiation parts form an annular structure with an opening.

Still refer to FIG. 3. FIG. 3 further shows an example of a direction of a current excited by the NFC antenna. After the NFC chip 50 sends the signal to the radiator 41 of the NFC antenna, the signal is transmitted on the radiator 41, and an eddy current is excited in space enclosed by the radiator 41. As shown in FIG. 3, in a space area enclosed by the first radiation part 411, the second radiation part 412, and the third radiation part 413, a current flows from the feed point 414 to the ground point 415, and then flows from the ground point 415 to the feed point 414, to form a closed eddy current and form an electromagnetic field. Performance of the electromagnetic field directly affects performance of the NFC antenna. It can be learned from the structure shown in FIG. 3 that the radiator 41 of the NFC antenna is separately disposed, and may be decoupled from another non-NFC antenna. In addition, the NFC antenna uses a structure in which one end is used for feeding and the other end is grounded, so that a structure of the entire NFC antenna is simple, and disposing is facilitated.

FIG. 4 shows a second type of radiator 41 of the NFC antenna according to an embodiment of this application. A radiator 41 shown in FIG. 4 includes a first radiation part 411 and a second radiation part 412 connected to the first radiation part 411, and the first radiation part 411 and the second radiation part 412 form an L-shaped radiator 41. An end that is of the first radiation part 411 and that is away from the second radiation part 412 and an end that is of the second radiation part 412 and that is away from the first radiation part 411 are separately used as two ends of the radiator 41. For ease of description, the two ends are referred to as a first end and a second end. The feed point 414 is disposed at the first end, and the ground point 415 is disposed at the second end. Still referring to FIG. 4, the first radiation part 411 and the second radiation part 412 in FIG. 4 are disposed in a manner in which length directions are perpendicular. However, in the NFC antenna provided in this embodiment of this application, the length directions of the first radiation part 411 and the second radiation part 412 do not necessarily need to be perpendicular. Alternatively, an included angle between the length directions of the first radiation part 411 and the second radiation part 412 may be approximately parallel. For example, the included angle between the length directions of the first radiation part 411 and the second radiation part 412 may be different angles such as 80°, 90°, or 120°. Still referring to FIG. 4, a length of the first radiation part 411 is L1, and a width is W1; and a length of the second radiation part 412 is L2, and a width is W2. The width of the first radiation part 411 may be the same as, approximately equal to, or unequal to the width of the second radiation part 412, for example, W1=W2. The length of the first radiation part 411 and the length of the second radiation part 412 are not specifically limited herein, and L1≥L2 or L1≤L2. However, in any one of the foregoing length setting manners, a distance between the feed point 414 and the ground point 415 needs to meet a specified value. As shown in FIG. 4, if the distance between the feed point 414 and the ground point 415 is D, D is not less than the specified value. If the specified value is 9 mm, D≥9 mm. Specifically, a distance such as 10 mm, 11 mm, 15 mm, or 20 mm may be used, so that a signal of the NFC antenna can excite a larger eddy current.

Still refer to FIG. 4. FIG. 4 further shows an example of a direction of a current excited by the NFC antenna. After the NFC chip 50 sends the signal to the radiator 41 of the NFC antenna, the signal flows on the radiator 41, and an eddy current is excited in space enclosed by the radiator 41. As shown in FIG. 4, in a space area enclosed by the first radiation part 411 and the second radiation part 412, the current flows from the feed point 414 to the ground point 415, and then flows from the ground point 415 to the feed point 414, to form a closed eddy current and form an electromagnetic field. Performance of the electromagnetic field directly affects performance of the NFC antenna.

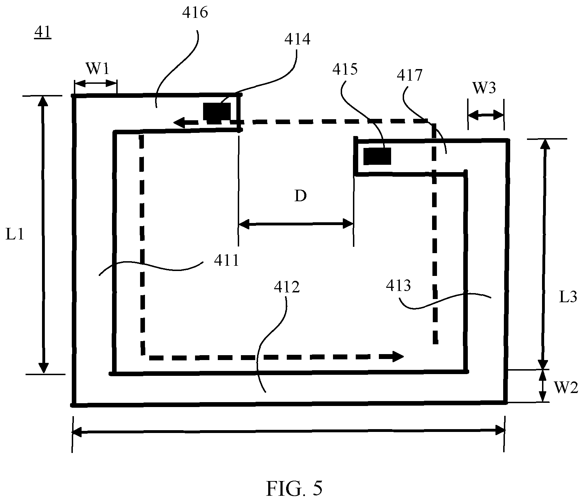

FIG. 5 shows an example of a structure of a third type of radiator 41 of the NFC antenna. FIG. 5 may be considered as a variant of the radiator 41 shown in FIG. 3. The radiator 41 shown in FIG. 5 also includes a first radiation part 411, a second radiation part 412, and a third radiation part 413, and the first radiation part 411, the second radiation part 412, and the third radiation part 413 form a U-shaped radiator 41. However, when the first radiation part 411 and the third radiation part 413 are disposed, there is a first bending structure 416 at an end that is of the first radiation part 411 and that is away from the second radiation part 412, and there is a second bending structure 417 at an end that is of the third radiation part 413 and that is away from the second radiation part 412. As shown in FIG. 5, both the first bending structure 416 and the second bending structure 417 are bent toward space enclosed by the radiator 41. The first bending structure 416 faces the third radiation part 413, and the second bending structure 417 faces the first radiation part 411. For a length L1 and a width W1 of the first radiation part 411, a length L2 and a width W2 of the second radiation part 412, and a length L3 and a width W3 of the third radiation part 413, refer to related descriptions in FIG. 3. The length L 1 of the first radiation part 411 is a vertical part of the first radiation part 411, and does not include a size of the first bending structure 416. The length L3 of the third radiation part 413 is a length of a vertical part of the third radiation part 413, and does not include a size of the second bending structure 417.

Still refer to FIG. 3. The ground point 415 and the feed point 414 are disposed in a one-to-one correspondence on the first bending structure 416 and the second bending structure 417. The feed point 414 is disposed at an end that is of the first bending structure 416 and that is away from the first radiation part 411, and the ground point 415 is disposed at an end that is of the second bending structure 417 and that is away from the third radiation part 413. In addition, a distance D between the ground point 415 and the feed point 414 also meets: D is at least not less than a specified value. If the specified value is 9 mm, D≥9 mm. Specifically, a distance such as 10 mm, 11 mm, 15 mm, or 20 mm may be used, so that a signal of the NFC antenna can excite a larger eddy current.

Still refer to FIG. 5. FIG. 5 further shows an example of a direction of a current excited by the NFC antenna. After the NFC chip 50 sends the signal to the radiator 41 of the NFC antenna, the signal flows on the radiator 41, and an eddy current is excited in space enclosed by the radiator 41. As shown in FIG. 5, in a space area enclosed by the first radiation part 411 and the second radiation part 412, the current flows from the feed point 414 to the ground point 415, and then flows from the ground point 415 to the feed point 414, to form a closed eddy current and form an electromagnetic field. Performance of the electromagnetic field directly affects performance of the NFC antenna.

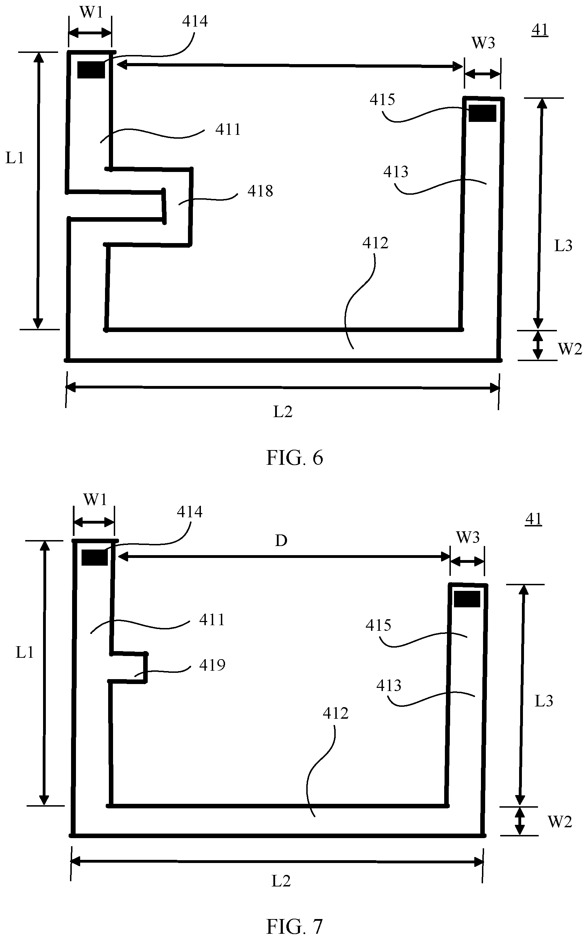

FIG. 6 shows an example of a structure of a fourth type of radiator 41 of the NFC antenna. FIG. 6 may be considered as a variant of the radiator 41 shown in FIG. 3. The radiator 41 shown in FIG. 6 also includes a first radiation part 411, a second radiation part 412, and a third radiation part 413, and the first radiation part 411, the second radiation part 412, and the third radiation part 413 form a U-shaped radiator 41. As shown in FIG. 6, when the first radiation part 411 is disposed, a third bending structure 418 used to avoid a structure or a component in the mobile terminal is disposed on the first radiation part 411. For example, the third bending structure 418 is a U-shaped third bending structure 418 or a V-shaped third bending structure 418. FIG. 6 shows an example in which the third bending structure 418 is bent toward space enclosed by the radiator 41. However, in this embodiment of this application, the third bending structure 418 may be bent away from the space enclosed by the radiator 41. This is not specifically limited herein. When the radiator 41 is disposed in the mobile terminal, there may be a case in which a component, a screw, or space in the mobile terminal needs to be avoided. When the third bending structure 418 is disposed, the radiator 41 may be disposed after the foregoing component is avoided, so that a space area enclosed by the mobile terminal is relatively large, and larger space enclosed by the NFC antenna can cover a wider frequency, so that the NFC antenna can cover a larger frequency band. FIG. 6 shows an example in which the third bending structure 418 is disposed on the first radiation part 411. However, in this embodiment of this application, the third bending structure 418 may be disposed on the second radiation part 412 or the third radiation part 413 as required. When the radiator 41 needs to be disposed, the third bending structure 418 may need to be disposed on the radiator 41 based on a location setting requirement, and a specific disposing location of the third bending structure 418 is not specifically limited herein.

Still refer to FIG. 6. For a length L1 and a width W1 of the first radiation part 411, a length L2 and a width W2 of the second radiation part 412, and a length L3 and a width W3 of the third radiation part 413, refer to related descriptions in FIG. 3. The length L1 of the first radiation part 411 is a vertical part of the first radiation part 411, and does not include a size of the third bending structure 418. The length L3 of the third radiation part 413 is a length of a vertical part of the third radiation part 413.

Still refer to FIG. 6. The ground point 415 and the feed point 414 are disposed in a one-to-one correspondence at an end of the first radiator 411 and an end of the second radiator 413, and a distance D between the ground point 415 and the feed point 414 also meets: D is at least not less than a specified value. If the specified value is 9 mm, D≥9 mm. Specifically, a distance such as 10 mm, 11 mm, 15 mm, or 20 mm may be used, so that a signal of the NFC antenna can excite a larger eddy current. A current excited by the NFC antenna shown in FIG. 6 is similar to the current shown in FIG. 3, and details are not described herein again.

FIG. 7 shows an example of a structure of a fifth type of radiator 41 of the NFC antenna according to an embodiment of this application. FIG. 7 may be considered as a variant of the radiator 41 shown in FIG. 3. The radiator 41 shown in FIG. 7 also includes a first radiation part 411, a second radiation part 412, and a third radiation part 413, and the first radiation part 411, the second radiation part 412, and the third radiation part 413 form a U-shaped radiator 41. As shown in FIG. 7, a tuning stub 419 is disposed on the first radiation part 411, and the tuning stub 419 is a protrusion extended on the first radiation part 411. Certainly, the tuning stub 419 may alternatively be disposed at different locations such as the second radiation part 412 or the third radiation part 413. A specific disposing location of the tuning stub 419 is not specifically limited herein.

Still refer to FIG. 7. For a length L1 and a width W1 of the first radiation part 411, a length L2 and a width W2 of the second radiation part 412, and a length L3 and a width W3 of the third radiation part 413, refer to related descriptions in FIG. 3. The length L1 of the first radiation part 411 is a vertical part of the first radiation part 411, and does not include a size of the third bending structure 418. The length L3 of the third radiation part 413 is a length of a vertical part of the third radiation part 413.

Still refer to FIG. 7. The ground point 415 and the feed point 414 are disposed in a one-to-one correspondence on a first bending structure 416 and a second bending structure 417. The feed point 414 is disposed at an end that is of the first bending structure 416 and that is away from the first radiation part 411, and the ground point 415 is disposed at an end that is of the second bending structure 417 and that is away from the third radiation part 413. In addition, a distance D between the ground point 415 and the feed point 414 also meets: D is at least not less than a specified value. If the specified value is 9 mm, D≥9 mm. Specifically, a distance such as 10 mm, 11 mm, 15 mm, or 20 mm may be used, so that a signal of the NFC antenna can excite a larger eddy current. A current excited by the NFC antenna shown in FIG. 7 is similar to the current shown in FIG. 3, and details are not described herein again.

It can be learned from FIG. 3 to FIG. 7 that, in several specific examples of disposing of the radiator 41 of the NFC antenna in embodiments of this application, in this embodiment of this application, the radiator 41 only needs to be an annular radiator 41 with an opening, and ends of the radiator 41 on two sides of the opening are separately the feed point 414 and the ground point 415. A specific disposing manner of the radiator 41 may be changed as required, and this is specifically limited herein.

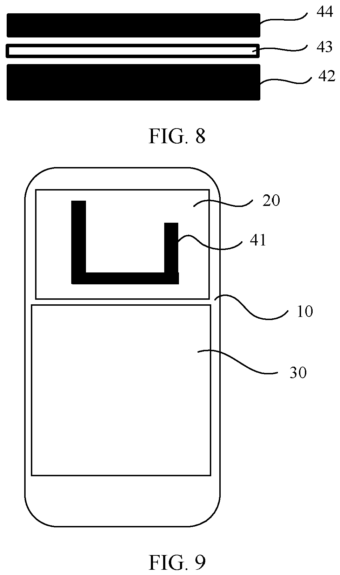

Still refer to FIG. 3 to FIG. 7. The radiator 41 includes a multi-layer structure regardless of a structure used by the radiator 41. FIG. 8 is a schematic diagram of a cross-section of the radiator 41. It can be learned from FIG. 8 that the radiator 41 mainly includes three layers: a conductive layer 44, an adhesive layer 43, and a ferrite layer 42. The conductive layer 44 and the ferrite layer 42 are stacked, and the conductive layer 44 is fixedly connected to the ferrite layer 42 by using the adhesive layer 43. The adhesive layer 43 may be specifically a common adhesive such as a cured adhesive or a double-sided adhesive. It should be understood that FIG. 8 is merely a specific example, and the radiator 41 may further include a layer other than the layers structure shown in FIG. 8.

When the NFC antenna is disposed in the mobile terminal, the radiator 41 may be different structures in the mobile terminal. Referring to FIG. 9, when the radiator 41 of the NFC antenna is disposed in an upper area on the mainboard 20 of the mobile terminal, the radiator 41 may be a circuit layer or a copper-clad layer. The ferrite layer 42 is prepared in an upper structure in an area of the mainboard 20, and the ferrite layer 42 and the radiator 41 form an NFC antenna. It can be learned from FIG. 9 that the radiator 41 is disposed in the upper area of the mainboard 20, and the radiator 41 may enclose a relatively large space area by using upper space on the mainboard 20. To facilitate understanding of the NFC antenna provided in this embodiment of this application, sampling and measurement are performed on the NFC antenna, as shown in Table 1 and Table 2. Table 1 shows a verification effect of a ferrite at different lengths and voltages when W1=W2=W3=3 mm. L=L1+L2+L3 in Table 1. Table 2 shows a verification effect of an FPC at different widths when L1+L2+L3=110 mm. W=W1=W2=W3 in Table 2.

**Table 1**

| CARD TYPE | L=110 mm, 5 V | L=90 mm, 5 V | L=110 mm, 3.3 V |
|---|---|---|---|
| TAG 1 | 38 mm | 41 mm | 43 mm |
| TAG 2 | 42 mm | 43 mm | 42 mm |
| TAG 4 | 32 mm | 23 mm | 26 mm |
| TAG 5 | 58 mm | 53 mm | 55 mm |
| 4800 | 95 mm | 85 mm | 75 mm |
| S90 | 75 mm | 64 mm | 53 mm |
| 5200 | 92 mm | 85 mm | 86 mm |

**Table 2**

| CARD TYPE | | W=2.5 mm | W=3.5 mm | W=4.5 mm | W=6 mm |
|---|---|---|---|---|---|
| TAG 1 | | 47 mm | 47 mm | 46 mm | 48 mm |
| TAG 2 | | 55 mm | 56 mm | 55 mm | 57 mm |
| TAG 4 | | 31 mm | 31 mm | 32 mm | 32 mm |
| TAG 5 | | 65 mm | 62 mm | 64 mm | 68 mm |
| 4800 | Power on | 98 mm | 101 mm | 100 mm | 108 mm |
| S90 | Power on | 89 mm | 85 mm | 86 mm | 87 mm |
| 5200 | Power on | 101 mm | 101 mm | 102 mm | 104 mm |

It may be learned from Table 1 and Table 2 that the NFC antenna provided in this embodiment of this application may have good performance.

Certainly, the NFC antenna is not limited to a disposing location shown in FIG. 9. The radiator 41 of the NFC antenna may alternatively be disposed on a rear cover of the mobile terminal. For example, the radiator 41 of the NFC antenna is disposed in an area that is of the rear cover and that corresponds to the mainboard 20. A steel plate for increasing strength of the rear cover is disposed on the rear cover, or the rear cover is directly made of a metal material. In this case, the conductive layer 44 of the radiator 41 is the steel plate disposed on the rear cover or is the rear cover, and the ferrite layer 42 is disposed on the steel plate or the rear cover. However, regardless of whether the radiator 41 is disposed on the mainboard 20 or in the area that is of the rear cover and that corresponds to the mainboard 20, ground of the radiator 41 is still disposed on the mainboard 20.

In addition, when the radiator 41 is disposed on the rear cover, the NFC antenna and a charging coil of the mobile terminal may be disposed in a same area.

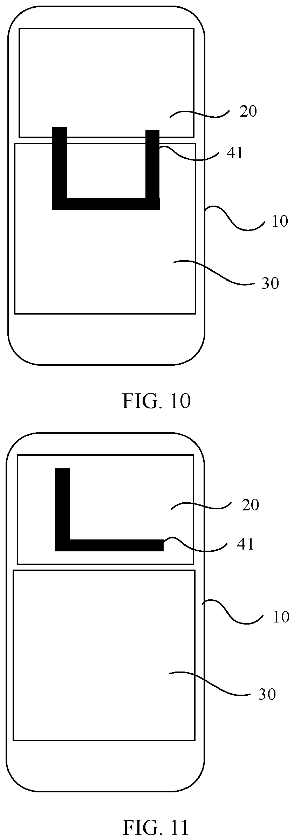

FIG. 10 shows an example of another specific structure disposed on the radiator 41. The radiator 41 is disposed in an area corresponding to an area of the battery 30 on the rear cover. A specific disposing manner is the same as the disposing manner shown in FIG. 9. In FIG. 10, the ground of the radiator 41 is still connected to ground of the mainboard 20.

FIG. 11 shows another case in which the radiator 41 is disposed in the mobile terminal. In FIG. 11, the radiator 41 is disposed on the mainboard 20 or in a rear cover area corresponding to the mainboard 20. For details, refer to the disposing manner in FIG. 9. A disposing location of the radiator 41 shown in FIG. 11 is similar to the disposing manner shown in FIG. 9, and only shapes of radiators 41 are different.

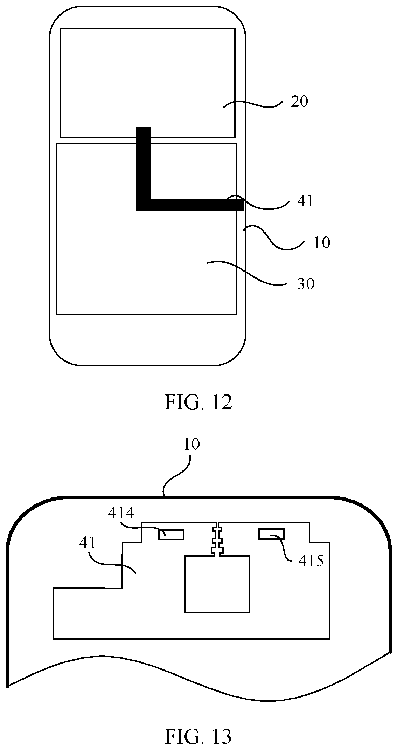

FIG. 12 shows another case in which the radiator 41 is disposed in the mobile terminal. In FIG. 12, the radiator 41 is disposed on the mainboard 20 or in a rear cover area corresponding to the mainboard 20. For details, refer to the disposing manner in FIG. 10. A disposing location of the radiator 41 shown in FIG. 12 is similar to the disposing manner shown in FIG. 10, and only shapes of radiators 41 are different. When the radiator 41 is disposed in the manner shown in FIG. 12, ground connected to the radiator 41 is a middle frame 10, and the ground point 415 of the radiator 41 is electrically connected to the middle frame 10 by using a spring plate or a conductive soft auxiliary material (conductive silicone, conductive foam, or the like).

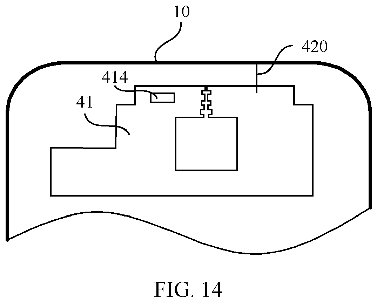

FIG. 13 shows another disposing manner of the radiator 41. In the mobile terminal, if there is a steel plate in an entire system architecture or in the area of the mainboard 20, the steel plate part may be designed in a manner of digging a hole. After the hole is dug and a slot is disposed, it is equivalent to that a path is extended and a reflow path of the antenna is added. As shown in FIG. 13, final performance is improved by more than 85% compared with performance of a simple top solution. Alternatively, as shown in FIG. 14, a reflow path of the antenna of the radiator 41 is further increased by connecting the radiator 41 of the NFC antenna reused by the steel plate to the middle frame 10 of the mobile terminal by using a cable or a spring plate 420.

An embodiment of this application further provides a mobile terminal, and the mobile terminal includes a middle frame 10 and the antenna according to any one of the foregoing descriptions that is disposed on the middle frame 10. In the foregoing technical solution, an NFC antenna is separately disposed in the mobile terminal, to be decoupled from another non-NFC antenna. In addition, the NFC antenna is disposed in a manner in which a single end is used for feeding and the other end is grounded, so that single-end NFC performance is implemented in an environment with extremely small clearance. Compared with a dual-end NFC antenna in a conventional technology, the NFC antenna has lower costs and a smaller area.

When the antenna is specifically disposed, different forms may be used. In other words, as shown in FIG. 9, the mainboard 20 is disposed on the middle frame 10, and the antenna is disposed on an area of the mainboard 20. Alternatively, a similar variant shown in FIG. 10, FIG. 11, or FIG. 12 is used. For details, refer to the foregoing descriptions. Details are not described herein again. Alternatively, as shown in FIG. 13, a steel plate is disposed on the middle frame 10, and the antenna is disposed on the steel plate, and in addition, when the radiator 41 includes a conductive layer and a ferrite layer that are stacked, the steel plate is the conductive layer. Alternatively, as shown in FIG. 14, the middle frame 10 is a metal middle frame 10, and the metal middle frame 10 is used as ground of the mobile terminal; the steel plate is electrically connected to the metal middle frame 10; and the antenna is disposed on the steel plate, and a ground point of the antenna is disposed on the metal middle frame 10. An occupied area of the antenna is increased, and performance of the antenna is improved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna, applied to a mobile terminal, wherein the antenna comprises a feeding line, a radiator, and a grounding line;
the radiator is an annular radiator with an opening, and ends of the radiator on two sides of the opening are separately a feed point and a ground point;
a distance between the ground point and the feed point is not less than a specified value; and
the feed point is connected to the feeding line, and the ground point is connected to the grounding line.

2. The antenna according to claim 1, wherein the radiator comprises a first radiation part, a second radiation part, and a third radiation part, the second radiation part is separately connected to the first radiation part and the third radiation part, and the first radiation part, the second radiation part, and the third radiation part form a U-shaped radiator.

3. The antenna according to claim 1, wherein the radiator comprises a first radiation part and a second radiation part connected to the first radiation part, and the first radiation part and the second radiation part form an L-shaped radiator.

4. The antenna according to claim 1, wherein the radiator comprises a first radiation part, a second radiation part, and a third radiation part, the second radiation part is separately connected to the first radiation part and the third radiation part, and the first radiation part, the second radiation part, and the third radiation part form a U-shaped radiator;
an end that is of the first radiation part and that is away from the second radiation part has a first third bending structure;
an end that is of the third radiation part and that is away from the second radiation part has a second third bending structure; and
the ground point and the feed point are disposed in a one-to-one correspondence on the first third bending structure and the second third bending structure.

5. The antenna according to any one of claims 1 to 4, wherein a third bending structure configured to avoid a structure or a component in the mobile terminal is disposed on the radiator.

6. The antenna according to any one of claims 1 to 5, wherein a tuning stub is connected on the radiator.

7. The antenna according to any one of claims 1 to 6, wherein the radiator comprises a ferrite layer and a conductive layer that are stacked.

8. The antenna according to claim 7, wherein the conductive layer is a circuit layer or a steel plate of the mobile terminal.

9. The antenna according to any one of claims 1 to 8, wherein the specified value is 9 mm.

10. A mobile terminal, comprising a middle frame and the antenna according to any one of claims 1 to 9 that is disposed on the middle frame.

11. The mobile terminal according to claim 10, wherein a mainboard is disposed on the middle frame, and a feed point and a ground point of the antenna are disposed on the mainboard.

12. The mobile terminal according to claim 11, wherein a steel plate is disposed on the middle frame, the antenna is disposed on the steel plate, and when the radiator comprises a conductive layer and a ferrite layer that are stacked, the steel plate is the conductive layer.

13. The mobile terminal according to claim 12, wherein the middle frame is a metal middle frame, and the metal middle frame is configured as ground of the mobile terminal; the steel plate is electrically connected to the metal middle frame; and the antenna is disposed on the steel plate, and the ground point of the antenna is disposed in the metal middle frame.
